# EUROPEAN PATENT APPLICATION

(11) **EP 4 451 439 A1**
(43) Date of publication of application: **23.10.2024**
(21) Application number: 22941205.1
(22) Date of filing: 13.05.2022
(51) Int. Cl.: H01M 50/184, H01M 50/197

(54) **BATTERY CELL, BATTERY AND ELECTRIC DEVICE**

(71) Applicant: Contemporary Amperex Technology (Hong Kong) Limited, Central, Central And Western District (HK)
(72) Inventor: XU, Hu, Ningde, Fujian 352100 (CN); NIU, Shaojun, Ningde, Fujian 352100 (CN); JIN, Haizu, Ningde, Fujian 352100 (CN); GUO, Jipeng, Ningde, Fujian 352100 (CN); JIN, Yikuang, Ningde, Fujian 352100 (CN)
(74) Representative: Gong, Jinping
(86) International application number: PCT/CN2022/092827
(87) International publication number: WO 2023/216253

(57) **Abstract**

Provided in the embodiments of the present application are a battery cell, a battery and an electric device. The battery cell comprises a shell, which is provided with an opening; an electrode assembly, which is accommodated inside the shell; and a cover body, which closes the opening and forms a sealing structure with the shell. One of the shell and the cover body is provided with a first flanging portion; the first flanging portion is connected to the other one of the shell and the cover body by means of a connecting portion; the connecting portion comprises a first area and a second area; and the second area is lower in terms of strength than the first area. The battery cell has a relatively good level of safety.

## Description

### Technical Field

The present application relates to the technical field of batteries, and in particular, to a battery cell, a battery and an electric device.

### Background Art

Energy conservation and emission reduction are keys to the sustainable development of the automobile industry, and electric vehicles have become an important part of the sustainable development of the automobile industry, due to their advantages in energy conservation and environmental protection. For electric vehicles, battery technology is an important factor in its development.

In the development of the battery technology, in addition to improving the energy density of batteries, safety is also an issue that cannot be ignored. Hence, how to improve the safety of batteries is an urgent technical problem to be solved in the battery technology.

### Summary

Objectives of the present application are to provide a battery cell, a battery and an electric device. The battery has better safety.

The present application is realized by the following technical solutions.

In a first aspect, the present application provides a battery cell, including: a casing with an opening; an electrode assembly accommodated in the casing; a cover body configured for closing the opening and forming a sealed structure with the casing, wherein one of the casing and the cover body has a first flange portion, the first flange portion is connected to the other of the casing and the cover body through a connection portion, and the connection portion includes a first region and a second region, with the strength of the second region being lower than the strength of the first region.

According to the battery cell of the embodiment of the present application, the cover body closes the opening of the casing, so that the cover body is in sealing connection with the casing, and one of the casing and the cover body has a first flange portion, and the first flange portion is connected to the other of the casing and the cover body through the connection portion to reinforce the sealing connection portion of the casing and the cover body (i.e., the portion where the casing is in sealing connection with the cover body), to ensure the better sealing effect of the casing and the cover body, and the strength of the second region of the connection portion is lower than that of the first connection region, so that when the internal pressure or temperature of the battery cell reaches a threshold, the second region can be first broken relative to the first connection region to release the internal pressure, thus realizing directional pressure relief, and improving the safety of the battery cell.

According to some embodiments of the present application, the connection portion is a colloid (adhesive) or a welding portion.

In the above solution, the connection portion is a colloid or a welding portion, enabling better connection stability and sealing effect.

According to some embodiments of the present application, the connection portion is an annular connection portion provided in the circumferential direction of the opening.

In the above solution, the connection portion is an annular connection portion and arranged in the circumferential direction of the opening, to form a sealing structure, to ensure the sealing between the casing and the cover body, reduce the risk of electrolytic solution leakage, and improve the safety of the battery cell.

According to some embodiments of the present application, the connection portion has at least one gap, and the second region is the gap.

In the above solution, the second region is a gap, so the sealing effect between the casing and the cover body is relatively weak at the position corresponding to the second region, which facilitates rapid pressure relief at the position corresponding to the second region during the thermal runaway of the battery cell.

According to some embodiments of the present application, the connection portion is a welding portion, and the penetration depth of the second region is smaller than the penetration depth of the first region.

In the above solution, the second region acts as a connection weak region, and when the internal pressure or temperature of the battery cell reaches a threshold, the second region is more easily damaged by internal pressure impacting than the first region, so as to release the pressure from the second region.

According to some embodiments of the present application, the penetration depth of the second region is not greater than two thirds of the penetration depth of the first region.

In the above solution, the penetration depth of the second region and the penetration depth of the first region satisfy the above relationship, enabling that on one hand, the second region has certain strength, and on the other hand, when the internal pressure or temperature of the battery cell reaches a threshold, the second region is more easily damaged by internal pressure impacting than the first region.

According to some embodiments of the present application, the second region is located at the long side of a connection region of the cover body and the casing.

In the above solution, the second region is located at the long side of the whole connection region, enabling the length of the second region to be flexibly controlled according to the actual situation of the pressure generated by the battery cell.

According to some embodiments of the present application, the casing has the first flange portion at one end thereof where the opening is located, the cover body has a second flange portion, and the first flange portion and the second flange portion are seamed and connected to form a seaming part. The seaming part is the sealing structure, and the seaming part is connected to the cover body through the connection portion.

In the above solution, the casing has a first flange portion, and the first flange portion and the second flange portion are seamed and connected to form a seaming part, such that there is a larger sealing area between the casing and the cover body, which improves the sealing effect of the connection of the casing and the cover body, reduces the risk of liquid leakage and improves the safety of the battery cell.

According to some embodiments of the present application, the cover body has the first flange portion, the casing has the second flange portion at one end thereof where the opening is located, and the first flange portion and the second flange portion are seamed and connected to form a seaming part. The seaming part is the sealing structure, and the seaming part is connected to the casing through the connection portion.

In the above solution, the cover body has the first flange portion, and the first flange portion and the second flange portion are seamed and connected to form a seaming part, such that there is a larger sealing area between the casing and the cover body, which improves the sealing effect of the connection of the casing and the cover body, reduces the risk of liquid leakage and improves the safety of the battery cell.

According to some embodiments of the present application, the seaming part is coiled at least one turn.

In the above solution, the seaming part is coiled at least one turn, increasing the sealing strength and increasing the difficulty of sealing failure.

According to some embodiments of the present application, the casing has a limiting portion and the first flange portion at the end thereof where the opening is located, and the edge portion of the cover body is clamped between the limiting portion and the first flange portion.

In the above solution, the edge portion of the cover body is clamped between the limiting portion and the first flange portion, enabling stable connection of the cover body and the casing and reduced risk of sealing failure caused by displacement of the cover body relative to the casing.

According to some embodiments of the present application, the limiting portion is an annular structure extending in the circumferential direction of the casing, and the limiting portion forms a protrusion at the inner peripheral surface of the casing, and forms a recess at the outer peripheral surface of the casing.

In the above solution, the limiting portion is an annular structure, increasing the connection area between the casing and the cover body and thereby increasing the sealing effect with the cover body.

According to some embodiments of the present application, the battery cell further includes: a sealing member disposed between the limiting portion and the first flange portion, wherein the cover body and the casing are sealingly connected by the sealing member to form the sealing structure.

In the above solution, when the cover body and the casing are sealingly connected by the sealing member, the sealing member is tightly pressed against the cover body by the limiting portion and the first flange portion, which can enhance the sealing between the cover body and the casing.

According to some embodiments of the present application, the cover body is the wall with the largest area among all the walls of the battery cell.

According to some embodiments of the present application, the battery cell further includes: electrode terminals disposed on the cover body or on a surface of the casing adjacent to the cover body, wherein the electrode terminals are electrically connected to the electrode assembly.

In the above solution, the electrode terminals are flexibly provided in position, facilitating the connection between the electrode terminals and the electrode assembly.

According to some embodiments of the present application, the thickness of the casing is 0.2-1.8 mm, and/or the thickness of the cover body is 0.2-1.8 mm.

In the above solution, the thicknesses of the casing and the cover body meet the above parameters, which can ensure that the casing and the cover body each have certain strength, and can also lower material cost and reduce space occupation.

In a second aspect, the present application provides a battery, including a plurality of the above-mentioned battery cells, wherein the plurality of battery cells are stacked in a first direction, and the first wall of each of the battery cells is perpendicular to the first direction, the connection portion is disposed on the second wall, and the second wall intersects with the first wall.

According to the battery of the embodiment of the present application, since the plurality of battery cells are stacked in the first direction, if the connection portion is arranged on the first wall, the release of the internal pressure of the battery cells is affected during the thermal runaway of the battery cells. In the present solution, the connection portion is arranged on the second wall, and the second region can release the internal pressure in time during the thermal runaway of the battery cell, so as to realize the timely pressure relief of the battery cell, so that the battery has higher safety.

In a third aspect, the present application provides an electric device, including at least one battery cell mentioned above.

The above description is only an overview of the technical solution of the present application. In order to better understand the technical means of the present application, it may be implemented according to the contents of the description, and in order to make the above and other purposes, features and advantages of the present application more obvious and understandable, embodiments of the present application are specifically listed below.

### Brief Description of Drawings

In order to more clearly illustrate the technical solutions of the embodiments of the present application, the drawings that are required to be used in the embodiments will be briefly introduced below. Apparently, the following described drawings only show some embodiments of the present application, and those skilled in the art can also obtain other drawings based on these drawings without paying creative work.
FIG. 1 is a schematic structural view of a vehicle provided in some embodiments of the present application;
FIG. 2 is a schematic structural view of s battery provided in some embodiments of the present application;
FIG. 3 is a schematic structural view of a battery cell provided in some embodiments of the present application;
FIG. 4 is a schematic structural view of a battery cell provided in other embodiments of the present application;
FIG. 5 is a schematic structural view of a connection portion provided in some embodiments of the present application;
FIG. 6 is a schematic structural view of a connection portion provided in other embodiments of the present application;
FIG. 7 is a view showing assembling of a first flange portion of the casing and a second flange portion of the cover body provided by some embodiments of the present application;
FIG. 8 is a local enlarged view of Part A in FIG. 7.
FIG. 9 is a view showing assembling of a first flange portion of the casing and a second flange portion of the cover body provided by other embodiments of the present application;
FIG. 10 is a view showing assembling of a second flange portion of the casing and a first flange portion of the cover body provided by some embodiments of the present application;
FIG. 11 is a local enlarged view of Part B in FIG. 10;
FIG. 12 is a view showing assembling of a second flange portion of the casing and a first flange portion of the cover body provided by other embodiments of the present application;
FIG. 13 is a local enlarged view of Part C in FIG. 12;
FIG. 14 is a view showing assembling of a limiting portion and a first flange portion of the casing and the cover body provided by some embodiments of the present application;
FIG. 15 is a local enlarged view of Part D in FIG. 14;
FIG. 16 is a schematic view of electrode terminals being provided at the cover body, provided in some embodiments of the present application;
FIG. 17 is a schematic view of electrode terminals being provided at the casing, provided in some embodiments of the present application;
FIG. 18 is a schematic view of electrode terminals being provided at the casing, provided in other embodiments of the present application;
FIG. 19 is a schematic view of electrode terminals being provided at the casing, provided in yet other embodiments of the present application; and
FIG. 20 is a schematic structural view of a first flange portion provided in some embodiments of the present application.

In the drawings, the drawings are not drawn to the actual scale.

Reference signs: 100-battery; 10-box body; 20-battery cell; 21-casing; 211-opening; 212-limiting portion; 22-cover body; 221-body; 222-side wall; 23-electrode assembly; 24-electrode terminal; 251-first flange portion; 251 1-cut (incision); 252-second flange portion; 253-seaming part; 26-connection portion; 261-first region; 262-second region; 27-sealing member; 28-sealing structure; 201-first wall; 202-second wall; 200-controller; 300-motor; 1000-vehicle; X-first direction.

### Detailed Description of Embodiments

The implementations of the present application will be further described in detail below with reference to the drawings and embodiments. The detailed description and drawings of the following embodiments are used to illustrate the principles of the present application, but not to limit the scope of the present application, that is, the present application is not limited to the described embodiments.

Unless otherwise defined, all technical and scientific terms used herein have the same meaning as commonly understood by those skilled in the technical field of the present application. The terms used herein are only for the purpose of describing embodiments, and are not intended to limit the present application. Terms "comprising" and "having" and any variations thereof in the specification and claims of the present application and the above description of the drawings are intended to cover a non-exclusive inclusion.

In the description of the embodiments of the present application, technical terms such as "first" and "second" are only used to distinguish different objects, and should not be understood as indicating or implying importance in relativity or implicitly indicating the number, specific sequence, or primary-subordinate relationship of the indicated technical features. In the description of the embodiments of the present application, "plurality" means two or more, unless otherwise specifically defined.

Reference made herein to "embodiment" means that a particular feature, structure, or characteristic described in connection with the embodiment may be included in at least one embodiment of the present application. The phases occurring in various places in the specification do not necessarily all refer to the same embodiment, nor are separate or alternative embodiments mutually exclusive of other embodiments. It is understood explicitly and implicitly by those skilled in the art that the embodiments described herein may be combined with other embodiments.

In description of the embodiments of the present application, the term "and/or" in the present application indicates only an association relationship describing associated objects, meaning that there may be three kinds of relationships. For example, A and/or B may indicate three situations: there is only A, there are both A and B, and there is only B. In addition, the character "/" here generally indicates that the associated objects therebefore and thereafter have an "or" relationship.

In the description of the embodiments of the present application, "plurality" means two or more (including two).

In the description of the embodiments of the present application, the orientation or positional relationship indicated by technical terms "length", "width", "thickness", "inner", "outer", "circumferential direction", etc. are based on orientation or positional relationship shown in the drawings, only for the convenience of describing the embodiments of the present application and simplifying the description, rather than indicating or implying that the device or element referred to must have a specific orientation, or be constructed and operated in a specific orientation, and therefore cannot be understood as a limitation on the embodiments of the present application.

In the description of the embodiments of the present application, unless otherwise clearly specified and defined, technical terms such as "install", "link", "connect" and "fix" should be understood in a broad sense, for example, it may be a fixed connection, or a detachable connection, or an integral connection; it may be a mechanical connection, or an electrical connection; it may be a direct connection, or an indirect connection through an intermediary, or it may be an internal communication between two elements or an interaction relationship between two elements. Those of ordinary skill in the art may understand the specific meanings of the above terms in the embodiments of the present application according to specific situations.

In the present application, the mentioned battery refers to a single physical module that includes one or more battery cells to provide higher voltage and capacity. For example, the battery mentioned in the present application may include a battery module or a battery pack, and the like.

The battery cell includes an electrode assembly and an electrolytic solution, the electrode assembly being composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, and the current collector not coated with the positive electrode active material layer is used as the positive electrode tab. Taking a lithium-ion battery cell as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, and the current collector not coated with the negative electrode active material layer is used as the negative electrode tab. The material of the negative current collector may be copper, and the negative electrode active material may be carbon or silicon, etc. In order to ensure that a large current passes without fusing, the number of positive electrode tabs is multiple and the positive electrode tabs are stacked together, and the number of negative electrode tabs is multiple and the negative electrode tabs are stacked together. The material of the separator may be PP (polypropylene) or PE (polyethylene), etc.

The battery cell also includes a casing and a cover body, the casing has an opening, the electrode assembly is accommodated in the casing, the cover body closes the opening to form a closed space with the casing, and the electrolytic solution is located in the closed space.

For the development of battery technology, many design factors need to be considered at the same time, for example, performance parameters such as energy density, discharge capacity, and charge-discharge rate. In addition, battery safety also needs to be considered.

The sealing of the connection of the casing and cover body is critical to the safety of the battery cell. If the problem of sealing failure occurs, the electrolytic solution inside the casing may leak to the outside of the battery cell, causing safety problems such as corrosion and short circuit.

The inventors found that in the related art, only one sealing structure is formed between the casing and the cover body, and when the sealing structure is defective due to process errors or other problems, it is easy to cause sealing failure.

In view of this, embodiments of the present application provide a technical solution, in which the battery cell includes a casing, an electrode assembly and a cover body. The casing has an opening, the electrode assembly is accommodated in the casing, and the cover body closes the opening to form a closed space with the casing. In the above, one of the casing and the cover body has a first flange portion, the first flange portion is connected to the other of the casing and the cover body through a connection portion, and the connection portion includes a first region and a second region, with the strength of the second region being lower than the strength of the first region. By making one of the casing and the cover body provided with a first flange portion, and making the first flange portion connected to the other of the casing and the cover body through the connection portion to reinforce the sealing connection portion of the casing and the cover body, the stability of the sealing connection of the casing and the cover body is strengthened, and meanwhile, the strength of the second connection region of the connection portion is lower than that of the first connection region, so that when the internal pressure or temperature of the battery cell reaches a threshold, the second connection region can be first broken relative to the first connection region to release the internal pressure, thus realizing directional pressure relief, and improving the safety of the battery cell.

The battery cell disclosed in the embodiments of the present application cell may be used, but not limited to, in electric device such as vehicles, ships or aircrafts. The power source system of the electric device may be composed of the battery cells and batteries disclosed in the present application.

Embodiments of the present application provide an electric device using the battery as a power source. The electric device may be, but not limited to, a mobile phone, a tablet computer, a notebook computer, an electric toy, an electric tool, an electric bicycle, an electric motorbike, an electric vehicle, a ship, a spacecraft, and the like. Among them, the electric toy may include fixed or mobile electric toy, for example, game console, electric car toy, electric ship toy and electric airplane toy, etc. and the spacecraft may include airplane, rocket, space shuttle, spaceship, etc.

In the following embodiments, for convenience of description, description is made by taking, as an example, an electric device according to an embodiment of the present application being a vehicle 1000.

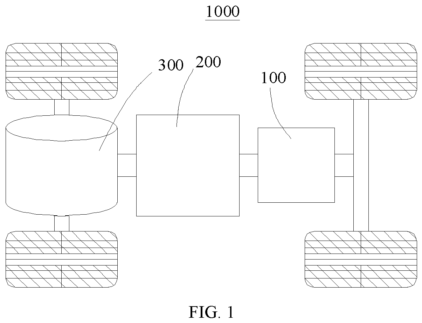

Referring to FIG. 1, FIG. 1 is a schematic structural view of a vehicle 1000 provided in some embodiments of the present application. The vehicle 1000 may be a fuel vehicle, a gas vehicle or a new energy vehicle, and the new energy vehicle may be a pure electric vehicle, a hybrid power vehicle or an extended-range vehicle, etc. A battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000 for the electric circuit system of the vehicle 1000, for example, for working power requirements during starting, navigating, and operating of the vehicle 1000.

The vehicle 1000 may further include a controller 200 and a motor 300, the controller 200 being used to control the battery 100 to supply power to the motor 300, for example, for working power requirements during starting, navigating and running of the vehicle 1000.

In some embodiments of the present application, the battery 100 can not only be used as an operating power source for the vehicle 1000, but also be used as a driving power source for the vehicle 1000 to replace or partially replace fuel oil or natural gas to provide driving power for the vehicle 1000.

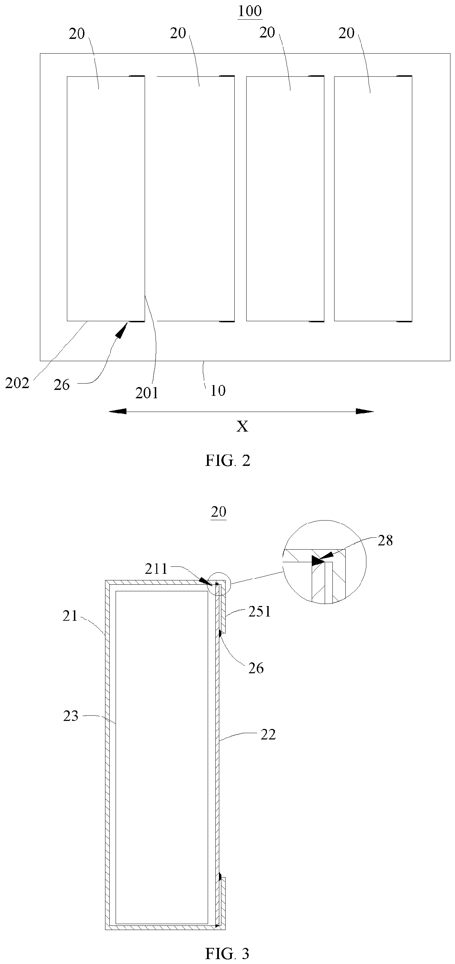

Referring to FIG. 2, FIG. 2 is a schematic structural view of a battery 100 provided in some embodiments of the present application. The battery 100 includes a box body 10 and battery cells 20, and the battery cells 20 are accommodated in the box body 10. In the above, the box body 10 is used for providing an accommodation space for the battery cells 20, and the box body 10 may be in various structures. In some embodiments, the box body 10 may include a first part and a second part, the first part and the second part cover each other, and the first part and the second part together define an accommodation space for accommodating the battery cells 20. The second part may be in a hollow structure with one end open, the first part may be in a plate-shaped structure, and the first part covers the opening side of the second part to make the first part and the second part together define the accommodation space. The first part and the second part may also each be in a hollow structure with one side open, and the opening side of the first part covers the opening side of the second part.

In the battery 100, there may be multiple battery cells 20, the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other, and then the whole composed of the multiple battery cells 20 is accommodated in the box body 10. Certainly, the battery 100 may be formed in the way that the multiple battery cells 20 are first in serial or in parallel or in hybrid connection with each other to form battery modules, and then the multiple battery modules are in serial or in parallel or in hybrid connection with each other to form a whole, and accommodated in the box body 10. The battery 100 may also include other structures, for example, the battery 100 may further include a bus component for realizing the electrical connection between the multiple battery cells 20.

In the above, each battery cell 20 may be a secondary battery or a primary battery. It may also be a lithium-sulfur battery, a sodium-ion battery or a magnesium-ion battery, but is not limited thereto. The battery cell 20 provided in embodiments of the present application is in a shape of a cube.

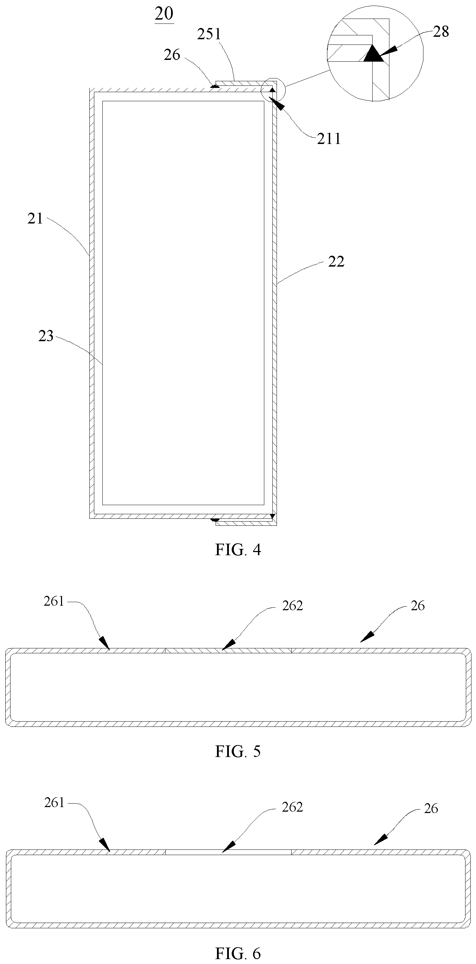

Referring to FIG.3 and FIG. 4, FIG. 3 is a schematic structural view of a battery cell 20 provided in some embodiments of the present application; and FIG. 4 is a schematic structural view of a battery cell 20 provided in other embodiments of the present application. The battery cell 20 refers to the smallest unit constituting the battery 100. As shown in FIG. 3 and FIG. 4, the battery cell 20 includes a casing 21, a cover body 22 and an electrode assembly 23. The casing 21 has an opening 211, and the cover body 22 closes the opening 211 to isolate the internal environment of the battery cell 20 from the external environment.

The casing 21 is an assembly for cooperating with the cover body 22 to form an internal environment of the battery cell 20, wherein the formed internal environment may be used to accommodate the electrode assembly 23, electrolytic solution and other components. The casing 21 and the cover body 22 may be independent components. The casing 21 may be in various shapes and various sizes. Specifically, the shape of the casing 21 may be determined according to the specific shape and size of the electrode assembly 23. The casing 21 may be made of various materials, such as copper, iron, aluminum, stainless steel, aluminum alloy, plastic, etc., which is not specially limited in this embodiment of the present application. The embodiment of the present application is introduced by taking the casing 21 being in a shape of a cuboid as an example.

The cover body 22 refers to a component that covers the opening 211 of the casing 21 to isolate the internal environment of the battery cell 20 from the external environment. Without limitation, the shape of the cover body 22 may be adapted to the shape of the casing 21 to cooperate with the casing 21. Optionally, the cover body 22 may be made of a material with certain hardness and strength (such as aluminum alloy), so that the cover body 22 is not easy to be deformed when being pressed and collided, enabling that the battery cell 20 has higher structural strength and also improved safety performance. The cover body 22 may be provided thereon with functional components such as electrode terminals. The electrode terminal may be used to be electrically connected with the electrode assembly 23 to output or input the electric energy of the battery cell 20. The cover body 22 may also be of various materials, such as copper, iron, aluminum, stainless steel, aluminum alloy, plastic, etc., which is not specially limited in this embodiment of the present application. In some embodiments, the inner side of the cover body 22 may be provided with an insulation structure, and the insulation structure may be used to isolate the electrical connection components in the casing 21 from the cover body 22 to reduce the risk of short circuit. Exemplarily, the insulation structure may be plastic, rubber or the like.

The electrode assembly 23 is a component, in the battery cell 20, where electrochemical reactions occur. The casing 21 may contain one or more electrode assemblies 23. The electrode assembly 23 is mainly formed by winding or stacking the positive electrode plate and the negative electrode plate, and generally, a separator is provided between the positive electrode plate and the negative electrode plate, and the separator is used for separating the positive electrode plate and the negative electrode plate to avoid internal short circuit between the positive electrode plate and the negative electrode plate. The parts of the positive electrode plate and the negative electrode plate having the active material constitute the main body of the cell assembly, and the parts of the positive electrode plate and the negative electrode plate having no active material respectively form tabs. The positive electrode tab and the negative electrode tab may be located at one end of the main body together or at two ends of the main body respectively. During the charge and discharge processes of the battery, the positive electrode active material and the negative electrode active material react with the electrolytic solution, and the tabs are connected to the electrode terminals to form a current loop.

According to some embodiments of the present application, referring to FIG. 3 and FIG. 4, the present application provides a battery cell 20. The battery cell 20 includes a casing 21, an electrode assembly 23 and a cover body 22. The casing 21 has an opening 211, the electrode assembly 23 is accommodated in the casing 21, and the cover body 22 closes the opening 211 and form a sealing structure 28 with the casing 21. In the above, one of the casing 21 and the cover body 22 has a first flange portion 251, the first flange portion 251 is connected to the other of the casing 21 and the cover body 22 through a connection portion 26, and the connection portion 26 includes a first region 261 and a second region 262, with the strength of the second region 262 being lower than the strength of the first region 261.

The cover body 22 closes the opening 211 and forms a sealing structure 28 with the casing 21, so that a sealing connection is formed between the cover body 22 and the casing 21. The sealing structure 28 may be a welding portion formed by welding the cover body 22 and the casing 21; and the sealing structure 28 may also be a sealing structure formed by sealing and connecting the cover body 22 and the casing 21 through a sealing member, wherein the sealing member may be a sealing ring of materials such as rubber and silica gel, or materials such as polypropylene and polyethylene, and the sealing structure 28 may also be a seaming portion formed by seaming the edge of the cover body 22 and the edge of the casing 21.

The first flange portion 251 may be provided surrounding the opening 211.

The first flange portion 251 is in a bent structure. For example, when the casing 21 has the first flange portion 251, the first flange portion 251 is bent relative to other portion of the casing 21 and connected to the cover body 22 through the connection portion 26; or, when the cover body 22 has the first flange portion 251, the first flange portion 251 is bent relative to other portion of the cover body 22, and is connected to the casing 21 through the connection portion 26. In other embodiments, when the first flange portion 251 is a part of the casing 21, the first flange portion 251 may also be connected through the connection portion 26 to the wall of the battery cell 20 adjacent to the first flange portion 251, after being bent relative to other portion of the casing 21, wherein the wall may be the wall of the casing 21, or the wall of the cover body 22; or, when the first flange portion 251 is a part of the cover body 22, the first flange portion 251 may also be connected through the connection portion 26 to the wall of the battery cell 20 adjacent to the first flange portion 251, after being bent relative to other portion of the cover body 22, wherein the wall may be the wall of the cover body 22, or the wall of the casing 21.

As shown in FIG. 3, the first flange portion 251 may be provided at the casing 21, and the first flange portion 251 is connected to the cover body 22 through the connection portion 26; or, as shown in FIG. 4, the first flange portion 251 may be provided at the cover body 22, and the first flange portion 251 is connected to the casing 21 through the connection portion 26.

The connection portion 26 is a part used to realize the connection between the first flange part 251 and the casing 21 or the cover body 22. For example, when the casing 21 has the first flange portion 251, the connection portion 26 is a part used to realize the connection between the first flange portion 251 and the cover body 22; and when the cover body 22 has the first flange portion 251, the connection portion 26 is a part used to realize the connection between the first flange part 251 and the casing 21.

The first region 261 and the second region 262 are two regions constituting the connection portion 26.

When the internal pressure or temperature of the battery cell 20 reaches a threshold, the connection portion 26 is located downstream or upstream of the sealing structure 28 on the discharge path of the heat flow inside the battery cell 20. For example, the connection portion 26 is located upstream of the sealing structure 28, and the heat flow first rushes out of the second region 262 and then rushes out of the sealing structure 28; or, the connection portion 26 is located downstream of the sealing structure 28, and the heat flow first rushes out of the sealing structure 28 and then rushes out of the second region 262 to be discharged to the outside of the battery cell.

According to the battery cell 20 of the embodiment of the present application, the cover body 22 closes the opening 211 of the casing 21, so that the cover body 22 is in sealing connection with the casing 21, and one of the casing 21 and the cover body 22 has a first flange portion 251, and the first flange portion 251 is connected to the other of the casing 21 and the cover body 22 through the connection portion 26 to reinforce the sealing connection portion of the casing 21 and the cover body 22 and increase the stability of sealing connection between the casing 21 and the cover body 22, to ensure the better sealing effect of the casing 21 and the cover body 22, and meanwhile, the strength of the second region 262 of the connection portion 26 is lower than that of the first connection region, so that when the internal pressure or temperature of the battery cell 20 reaches a threshold, the second region 262 can be first broken relative to the first connection region to release the internal pressure, thus realizing directional pressure relief, and improving the safety of the battery cell 20.

According to some embodiments of the present application, the connection portion 26 is a colloid or a welding portion.

When the connection portion 26 is a colloid, the first flange part 251 is bonded to the other of the casing 21 and the cover body 22 by the colloid; and when the connection portion 26 is a welding portion, the first flange part 251 is connected with the other of the casing 21 and the cover body 22 by welding.

In the above solution, the connection portion 26 is a colloid or welding portion, enabling better connection stability and sealing effect.

Referring to FIG. 5, FIG. 5 is a schematic structural view of a connection portion 26 provided in some embodiments of the present application. According to some embodiments of the present application, the connection portion 26 is an annular connection portion provided in the circumferential direction of the opening 211 (referring to FIG. 3 and FIG. 4).

In other words, the connection portion 26 is provided surrounding the opening 211, and the connection portion 26 may form a sealing structure.

In the above solution, the connection portion 26 is an annular connection portion 26 and arranged in the circumferential direction of the opening 211, to form a sealing structure, to ensure the sealing between the casing 21 and the cover body 22, reduce the risk of electrolytic solution leakage, and improve the safety of the battery cell 20.

Referring to FIG. 6, FIG. 6 is a schematic structural view of a connection portion 26 provided in other embodiments of the present application. According to some embodiments of the present application, the connection portion 26 has a gap, and the second region 262 is the gap.

The second region 262 is a gap, so that the strength of the second region 262 is zero, and the strength of the second region 262 is lower than that of the first region 261.

When the connection portion 26 is an annular connection portion 26 disposed in the circumferential direction of the opening 211, the first region 261 and the second region 262 form a ring (i.e., an annular shape). When the connection portion 26 has a gap, the gap makes the annular connecting portion 26 be in an open structure, the second region 262 is the gap, and the second region 262 and the first region 261 form the ring. In some embodiments, there may be multiple gaps, and the gaps are arranged at intervals in the circumferential direction of the opening.

In the above solution, the second region 262 is a gap, and the sealing effect between the casing 21 and the cover body 22 is relatively weak at the position corresponding to the second region 262, which facilitates rapid pressure relief at the position corresponding to the second region 262 during the thermal runaway of the battery cell 20.

According to some embodiments of the present application, the connection portion 26 is a welding portion, and the penetration depth of the second region 262 is smaller than the penetration depth of the first region 261.

The welding, also known as butt fusion, is a manufacturing process and technique of bonding metals or other thermoplastic materials such as plastics by using heat, high temperature, or high pressure.

It should be understood that the penetration depth refers to the distance from the surface of the weldment to the deepest part of the fusion zone in the butt weld between the first flange portion 251 and the other of the casing 21 and the cover body 22.

In the above solution, since the penetration depth of the second region 262 is smaller than the penetration depth of the first region 261, the second region 262 is a connection weak region. When the internal pressure or temperature of the battery cell 20 reaches a threshold, the second region 262 is more easily ruptured by internal pressure impacting than the first region 261, so as to release the pressure from the second region 262.

According to some embodiments of the present application, the penetration depth of the second region 262 is not greater than two thirds of the penetration depth of the first region 261.

In the above solution, the penetration depth of the second region 262 and the penetration depth of the first region 261 satisfy the above relationship, enabling that on one hand, the second region 262 has certain strength, and on the other hand, when the internal pressure or temperature of the battery cell 20 reaches a threshold, the second region 262 is more easily damaged by internal pressure impacting than the first region 261.

According to some embodiments of the present application, as shown in FIG. 5 and FIG. 6, the second region 262 is located at a long side of a connection region of the cover body 22 and the casing 21.

The region where the first flange portion 251 is connected to the cover body 22 or the casing 21 is the connection region formed by the connection portion 26. For example, when the connection region is a rectangle, the second region 262 is disposed at the long side of the rectangle.

In the above solution, the second region 262 is located at the long side of the whole connection region, enabling the length of the second region 262 to be flexibly controlled according to the actual situation of the pressure generated by the battery cell 20.

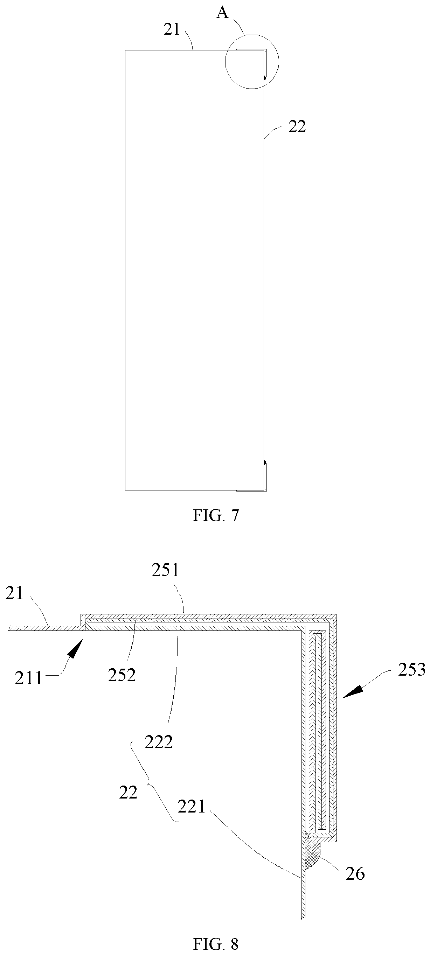

Referring to FIG. 7 and FIG, 8, FIG. 7 is a view showing assembling of a first flange portion 251 of the casing 21 and a second flange portion 252 of the cover body 22 provided by some embodiments of the present application, and FIG. 8 is a local enlarged view of Part A in FIG. 7. According to some embodiments of the present application, the casing 21 has a first flange portion 251 at one end thereof where the opening 211 is located, the cover body 22 has a second flange portion 252, and the first flange portion 251 and the second flange portion 252 are seamed and connected to form a seaming part 253. The seaming part 253 is the sealing structure 28, and the seaming part 253 is connected to the cover body 22 through the connection portion 26.

The first flange portion 251 is a part of the casing 21 and is formed at one end of the casing 21 where the opening 211 is. The second flange portion 252 is a part of the cover body 22, and after the cover body 22 closes the opening 211, the first flange portion 251 and the second flange portion 252 are connected in a way of seaming and sealing, to form the seaming part 253.

The seaming part 253 is a sealing structure formed after the first flange portion 251 and the second flange portion 252 are seamed. The seaming part 253 is connected to the cover body 22 through the connection portion 26. In other words, the first flange portion 251 and the second flange portion 252 are both connected to the cover body 22 through the connection portion 26. For example, the first flange portion 251 is attached to the second flange portion 252, and then seamed towards the cover body 22 to form the seaming part 253, wherein the outside of the seaming part 253 is the first flange portion 251, the first flange portion 251 may be directly connected to the cover body 22, or the first flange portion 251 is connected to the cover body 22 through the second flange portion 252.

In the above solution, the casing 21 has a first flange portion 251, the cover body 22 has a second flange portion 252, and the first flange portion 251 and the second flange portion 252 are seamed and connected to form a seaming part 253, so that there is a larger sealing area between the casing 21 and the cover body 22, which improves the sealing effect of the connection between the casing 21 and the cover body 22, reduces the risk of liquid leakage, and improves the safety of the battery cell 20.

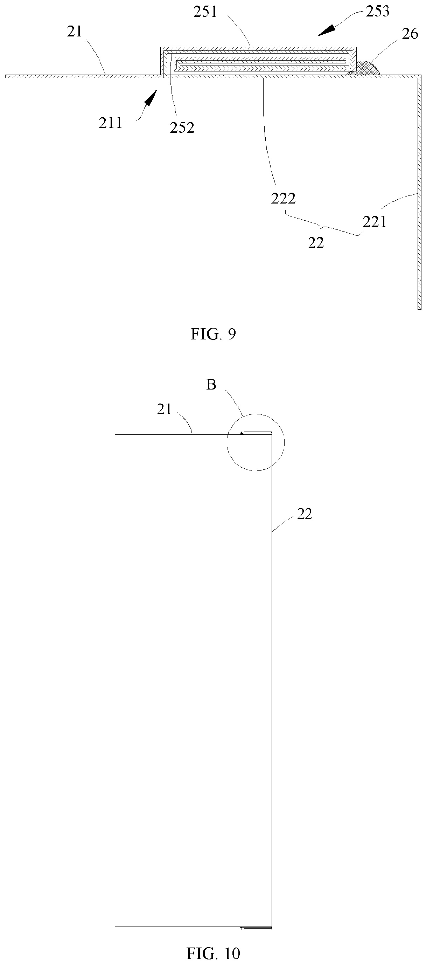

Referring to FIG. 8 and further referring to FIG. 9, FIG. 9 is a view showing assembling of a first flange portion 251 of the casing 21 and a second flange portion 252 of the cover body 22 provided by other embodiments of the present application. In some embodiments, as shown in FIG. 8 and FIG. 9, the casing 21 has a first flange portion 251, and the cover body 22 has a second flange portion 252. The cover body 22 may have a body 221 and a side wall 222. The side wall 222 is arranged surrounding the body 221. The body 221 is configured to face the electrode assembly 23. The second flange portion 252 is formed on the side wall 222. The first flange portion 251 and the second flange portion 252 are seamed and connected to form a seaming part 253. As shown in FIG. 9, the seaming part 253 may be connected to the side wall 222 of the casing 21 through the connection portion 26, or, as shown in FIG. 8, the seaming portion 253 may also be connected to the body 221 of the casing 21 through the connection portion 26.

It should be pointed out that when the seaming part 253 is connected to the side wall 222 of the casing 21 through the connection portion 26, the seaming part 253 does not exceed the body 221 in the direction perpendicular to the body 221, so as to avoid that the seaming part 253 interferes with other component(s) (such as another battery cell 20) during battery assembling.

According to some embodiments of the present application, in the embodiments where the casing 21 has a first flange portion 251 at one end thereof where the opening 211 is located and the cover body 22 has a second flange portion 252, after the first flange portion 251 and the second flange portion 252 are seamed and connected to form a seaming part 253, the seaming part 253 may also be connected to the casing 21 through the connection portion 26.

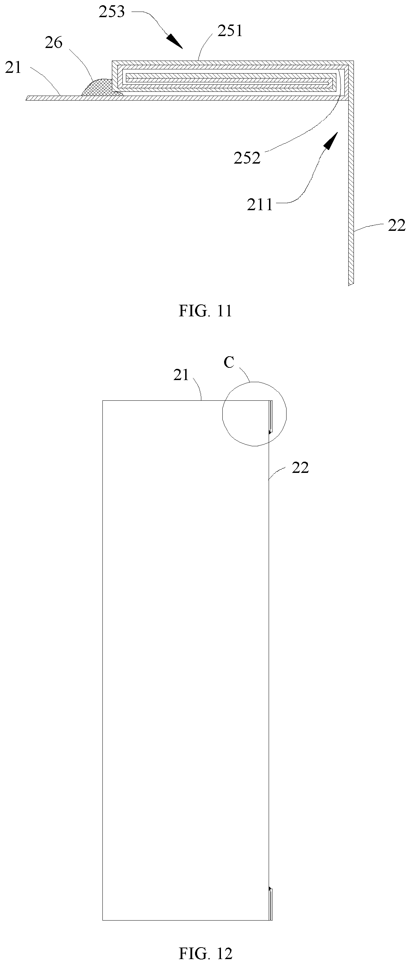

Referring to FIG. 10 and FIG. 11, FIG. 10 is a view showing assembling of a second flange portion 252 of the casing 21 and a first flange portion 251 of the cover body 22 provided by some embodiments of the present application, and FIG. 11 is a local enlarged view of Part B in FIG. 10. According to some embodiments of the present application, the cover body 22 has a first flange portion 251, and the casing 21 has a second flange portion 252 at one end thereof where the opening 211 is, and the first flange portion 251 and the second flange portion 252 are seamed and connected to form the seaming part 253, wherein the seaming part 253 is the sealing structure 28, and the seaming part 253 is connected to the casing 21 through the connection portion 26.

The seaming part 253 is a sealing structure formed after the first flange portion 251 and the second flange portion 252 are seamed. The seaming part 253 is connected to the casing 21 through the connection portion 26. In other words, the first flange portion 251 and the second flange portion 252 are both connected to the casing 21 through the connection portion 26. For example, the first flange portion 251 is attached to the second flange portion 252, and then seamed towards the casing 21 to form the seaming part 253, wherein the outside of the seaming part 253 is the first flange portion 251, the first flange portion 251 may be directly connected to the casing 21; or the first flange portion 251 is connected to the casing 21 through the second flange portion 252. The seaming part 253 may be attached to the side wall of the casing 21 adjacent to the second flange portion 252, or most of the seaming part 253 may be parallel to the side wall of the casing 21.

In the above solution, the cover body 22 has a first flange portion 251, the casing 21 has a second flange portion 252, and the first flange portion 251 and the second flange portion 252 are seamed and connected to form a seaming part 253, so that there is a larger sealing area between the casing 21 and the cover body 22, which improves the sealing effect of the connection between the casing 21 and the cover body 22, reduces the risk of liquid leakage, and improves the safety of the battery cell 20.

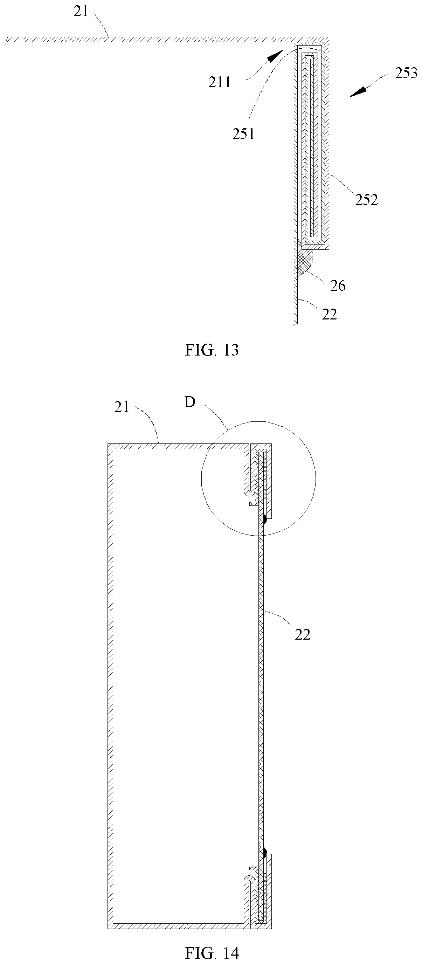

Referring to FIG. 12 and FIG. 13, FIG. 12 is a view showing assembling of a second flange portion 252 of the casing 21 and a first flange portion 251 of the cover body 22 provided by other embodiments of the present application, and FIG. 13 is a local enlarged view of Part C in FIG. 12. According to some embodiments of the present application, in the embodiment where the cover body 22 has a first flange portion 251 and the casing 21 has a second flange portion 252 at one end thereof where the opening 211 is, after the first flange portion 251 and the second flange portion 252 are seamed and connected to form the seaming part 253, the seaming part 253 may also be connected to the cover body 22 through the connection portion 26.

According to some embodiments of the present application, the seaming part 253 is coiled at least one turn.

That the seaming part 253 is coiled at least one turn means that the starting end of the seaming part 253 is wound at least one turn around the winding axis of the seaming part 253.

In the above solution, the seaming part 253 is coiled at least one turn, increasing the sealing strength and increasing the difficulty of sealing failure.

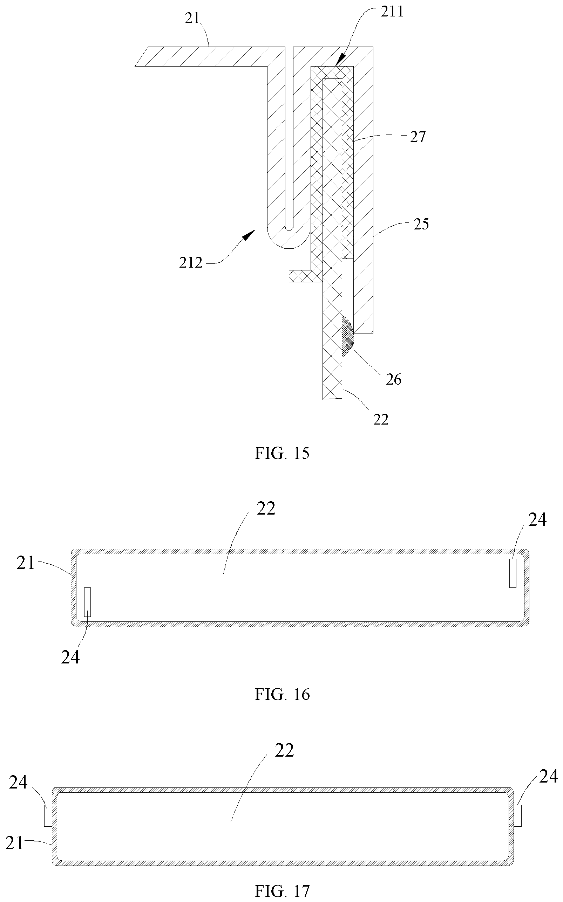

Referring to FIG. 14 and FIG. 15, FIG. 14 is a view showing assembling of the cover body 22 and a limiting portion 212 and a first flange portion 251 of the casing 21 provided by some embodiments of the present application; and FIG. 15 is a local enlarged view of Part D in FIG. 14. According to some embodiments of the present application, the casing 21 has the limiting portion 212 and the first flange portion 251 at the end thereof where the opening 211 is, and the edge portion of cover body 22 is clamped between the limiting portion 212 and first flange portion 251.

Both the limiting portion 212 and the first flange portion 251 are located at one end of the casing 21 where the opening 211 is, and in the thickness direction of the cover body 22, a space for accommodating the cover body 22 is formed between the limiting portion 212 and the first flange portion 251, and the cover body 22 is located in this space. The edge portion of the cover body 22 is clamped between the limiting portion 212 and the first flange portion 251, the limiting portion 212 can limit the movement of the cover body 22 toward the inside of the casing 21, and the first flange portion 251 can limit the movement of the cover body 22 in the direction away from the inside of the casing 21, so that the cover body 22 is assembled and fixed with the casing 21.

In the above solution, the edge portion of the cover body 22 is clamped between the limiting portion 212 and the first flange portion 251, enabling stable connection of the cover body 22 and the casing 21 and reduced risk of sealing failure caused by displacement of the cover body 22 relative to the casing 21.

According to some embodiments of the present application, the limiting portion 212 is an annular structure extending in the circumferential direction of the casing 21, and the limiting portion 212 forms a protrusion at the inner peripheral surface of the casing 21, and forms a recess at the outer peripheral surface of the casing 21.

The limiting portion 212 is close to the opening 211, and the limiting portion 212 is arranged surrounding the opening 211; and the limiting portion 212 may be a structure formed by rolling the casing 21, such that the limiting portion 212 forms a protrusion at the inner peripheral surface of the casing 21, and forms a recess at the outer peripheral surface of the casing 21, to facilitate the limiting portion 212 preventing the cover body 22 from moving toward the inside of the casing 21.

The limiting portion 212 is an annular structure extending in the circumferential direction of the casing 21, increasing the connection area between the casing 21 and the cover body 22 and thereby increasing the sealing effect with the cover body 22.

According to some embodiments of the present application, as shown in FIG. 14 and FIG. 15, the battery cell 20 further includes a sealing member 27, wherein the sealing member 27 is disposed between the limiting portion 212 and the first flange portion 251, and the cover body 22 and the casing 21 are sealingly connected through the sealing member 27 to form the sealing structure 28.

The limiting portion 212 and the first flange portion 251 clamp the cover body 22 from two sides of the cover body 22 in the thickness direction, the sealing member 27 is arranged between the limiting portion 212 and the first flange portion 251, and the sealing member 27 forms the sealing structure between the casing 21 and the cover body 22 to ensure the sealing between the casing 21 and the cover body 22.

In the above solution, when the cover body 22 and the casing 21 are sealingly connected through the sealing member 27, the sealing member 27 is tightly pressed against the cover body 22 by the limiting portion 212 and the first flange portion 251, which can enhance the sealing between the cover body 22 and the casing 21.

In some embodiments, the sealing member 27 may be an elastic member, and the sealing member 27 is in a compressed state between the limiting portion 212 and the first flange portion 251.

Exemplarily, the sealing member 27 may be of a material of rubber.

In the present application, the sealing member 27 is in a compressed state, and tightly presses the casing 21 and the cover body 22 under the action of its own elastic force, so as to achieve sealing.

In some embodiments, the sealing member 27 is bonded to the casing 21 and the cover body 22. The sealing member 27 may be formed by curing the colloid. When assembling the cover body 22 and the casing 21, the colloid may be coated on the inner wall (such as the limiting portion 212 and the first flange portion 251) of the casing 21, and then the cover body 22 covers the opening 211, so that the cover body 22 is adhered to the colloid.

In the above solution, one side of the cover body 22 is blocked by the limiting portion 212, and the other side of the cover body 22 is connected to the first flange portion 251 through the connection portion 26, so that the sealing connection between the cover body 22 and the casing 21 is stable.

In some embodiments, the sealing member 27 may be U-shaped, and the sealing member 27 is clamped by the limiting portion 212, the first flange portion 251 and the cover body 22. In other embodiments, the sealing member 27 may also be clamped by the limiting portion 212 and the cover body 22; or, the sealing member 27 may also be clamped by the first flange portion 251 and the cover body 22; or, the sealing member 27 may also be clamped by the inner surface of the casing 21 and the side surface of the edge portion of the cover body 22.

According to some embodiments of the present application, the cover body 22 is a wall with the largest area among all the walls of the battery cell 20.

The cover body 22 is a wall with the largest area among all the walls of the battery cell 20, in other words, the large surface of the battery cell 20 is provided as the cover body 22.

According to some embodiments of the present application, the battery cell 20 further includes electrode terminals 24, wherein the electrode terminals 24 are disposed on cover body 22 or on a surface of the casing 21 adjacent to the cover body 22, and the electrode terminals are electrically connected to the electrode assembly 23.

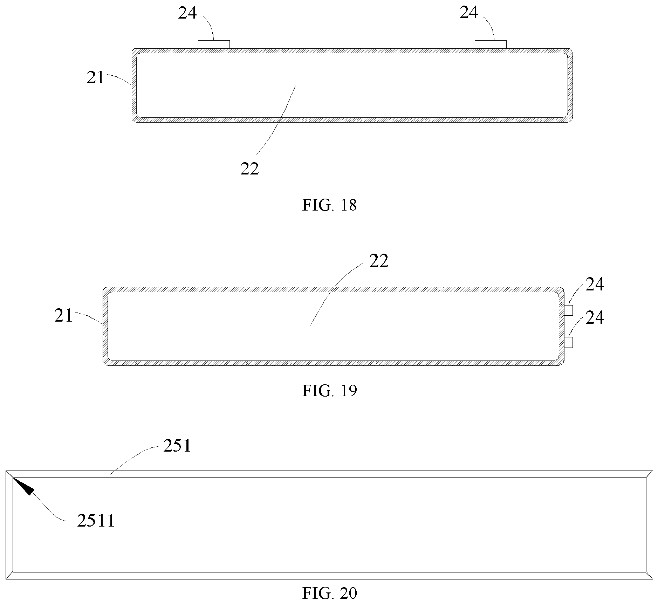

Referring to FIG. 16 to FIG. 19, FIG. 16 is a schematic view of electrode terminals 24 being provided at the cover body 22, provided in some embodiments of the present application; FIG. 17 is a schematic view of electrode terminals 24 being provided at the casing 21, provided in some embodiments of the present application; FIG. 18 is a schematic view of electrode terminals 24 being provided at the casing 21, provided in other embodiments of the present application; and FIG. 19 is a schematic view of electrode terminals 24 being provided at the casing 21, provided in yet other embodiments of the present application. Depending on the structure of the battery cell 20, the electrode terminals 24 may be disposed on the cover body 22, or the electrode terminals 24 may be disposed on a surface of the casing 21 adjacent to the cover body 22.

In some embodiments, the battery cell 20 is in a shape of a cuboid, and there are two electrode terminals 24, wherein the polarities of the two electrode terminals 24 are opposite. As shown in FIG. 16, the two electrode terminals 24 may be arranged on the cover body 22 of the battery cell 20, and the cover body 22 is the large surface of the battery cell 20; or the two electrode terminals 24 are arranged on the surface of the casing 21 adjacent to the cover body 22. For example, as shown in FIG. 17, the two electrode terminals 24 may be respectively arranged on the short sides of two sides of the battery cell 20. For another example, as shown in FIG. 18, the two electrode terminals 24 may be arranged on the long side of one side of the battery cell 20. For another example, as shown in FIG. 19, the two electrode terminals 24 may be disposed on one short side of one side of the battery cell 20.

The electrode terminals 24 are flexibly provided in position, facilitating the connection between the electrode terminals 24 and the electrode assembly 23.

According to some embodiments of the present application, the thickness of the casing 21 is 0.2-1.8 mm, and/or the thickness of the cover body 22 is 0.2-1.8 mm.

The thickness of the casing 21 may be 0.2-1.8mm, and the thickness of the cover body 22 may be 0.2-1.8mm; or the thickness of the casing 21 may be 0.2-1.8mm; or the thickness of the cover body 22 may be 0.2-1.8mm.

For example, the thickness of the casing 21 may be 0.2mm, 0.4mm, 0.6mm, 0.8mm, 1.0mm, 1.2mm, 1.4mm, 1.6mm or 1.8mm. The thickness of the cover body 22 may be 0.2mm, 0.4mm, 0.6mm, 0.8mm, 1.0mm, 1.2mm, 1.4mm, 1.6mm or 1.8mm.

In the above solution, the thicknesses of the casing 21 and the cover body 22 meet the above parameters, which can ensure that the casing 21 and the cover body 22 each have certain strength, and can also lower material cost and reduce space occupation.

Referring to FIG. 20, FIG. 20 is a schematic structural view of a first flange portion provided in some embodiments of the present application. According to some embodiments of the present application, the first flange portion 251 may be provided with cuts, the cuts are each located at the intersection of a long side and a short side of the first flange portion, and the first flange portion 251 is folded and connected to the other one of the casing 21 and the cover body 22, avoiding overlapping of the long side and the short side of the first flange portion 251. Taking the first flange portion 251 being in a shape of a rectangle as an example, the long side of the first flange portion 251 refers to the longest side of the first flange portion 251 in dimension; and the short side of the first flange portion 251 refers to the shortest side of the first flange portion 251 in dimension.

According to some embodiments of the present application, as shown in FIG. 2, the present application further provides a battery 100, including a plurality of battery cells 20 described in any of the above solutions, wherein the plurality of battery cells 20 are stacked in the first direction X, the first wall 201 of the battery cell 20 is perpendicular to the first direction, the connection portion 26 is disposed on the second wall 202, and the second wall 202 intersects with the first wall 201.

The first wall 201 is the wall of the battery cell 20 perpendicular to the first direction X; the second wall 202 is the wall of the battery cell 20 that intersects with the first wall 201, and in other words, the second wall 202 is a wall provided surrounding the first wall 201 and intersecting with the first wall 201.

Since the plurality of battery cells 20 are stacked in the first direction X, the first wall 201 has a large overlapping area with the adjacent battery cell, or abuts against the adjacent battery cell. If the connection portion 26 is arranged at the first wall 201, the connection portion 26 is blocked by the adjacent battery cell 20 during the thermal runaway of the battery cell, and the internal pressure of the battery cell 20 may not be released in time. In the present solution, the connection portion 26 is arranged at the second wall 202, and the connecting portion 26 does not overlap with the first wall 201 in the first direction X, so that when the internal pressure or temperature of the battery cell 20 reaches a threshold, the internal pressure is released from the second region 262 of the connection portion 26 in time, facilitating timely pressure releasing of the battery cell 20.

According to some embodiments of the present application, the present application further provides an electric device, including at least one battery cell 20 according to any one of the above solutions, and the battery cell 20 is used to provide electric energy for the electric device.

The electric device may be any aforementioned device or system using the battery cell 20.

According to some embodiments of the present application, referring to FIG. 3 to FIG. 20, the present application provides a battery cell 20 in a shape of cuboid, wherein the battery cell 20 includes a casing 21, an electrode assembly 23 and a cover body 22, the casing 21 has an opening 211, the electrode assembly 23 is accommodated in the casing 21, and the cover body 22 closes the opening 211. The casing 21 is in a shape of cuboid, wherein the long side and short side of the casing 21 are connected through an arc. The casing 21 has a first flange portion 251 at one end thereof where the opening 211 is and the cover body 22 has a second flange portion 252, the first flange portion 251 and the second flange portion 252 are seamed and connected to form a seaming part 253, the seaming part 253 may be connected to the cover body 22 through the connection portion 26, and the cover body 22 is the wall with largest area of the battery cell 20. The connection portion 26 is a welding portion, and the connection portion 26 includes a first region 261 and a second region 262, and the second region 262 is a gap, so that the strength of the second region 262 is smaller than that of the first region 261. In the present application, the seaming part 253 formed by the first flange portion 251 and the second flange portion 252 is connected with the cover body 22 through the connection portion 26, to reinforce the sealing connection portion of the casing 21 and the cover body 22, to ensure the better sealing effect of the casing 21 and the cover body 22, and the strength of the second region 262 of the connection portion 26 is lower than that of the first region 261, so that when the internal pressure or temperature of the battery cell 20 reaches a threshold, the internal pressure may be released at the second region 262, realizing the directional pressure relief of the battery cell 20, and improving the safety of the battery cell 20.

Although the present application has been described with reference to preferred embodiments, various modifications may be made and equivalents may be substituted for elements thereof without departing from the scope of the present application. In particular, as long as there is no structural conflict, the technical features mentioned in the various embodiments may be combined in any manner. The present application is not limited to the specific embodiments disclosed herein, but includes all technical solutions falling within the scope of the claims.

## Claims

1. A battery cell, comprising:
a casing, having an opening;
an electrode assembly, accommodated in the casing; and
a cover body, configured for closing the opening and forming a sealing structure with the casing,
wherein one of the casing and the cover body has a first flange portion, the first flange portion is connected to the other of the casing and the cover body through a connection portion, the connection portion comprises a first region and a second region, and a strength of the second region is lower than a strength of the first region.

2. The battery cell according to claim 1, wherein the connection portion is a colloid or a welding portion.

3. The battery cell according to claim 1 or 2, wherein the connection portion is an annular connection portion provided in a circumferential direction of the opening.

4. The battery cell according to any one of claims 1 to 3, wherein the connection portion has at least one gap, and the second region is the at least one gap.

5. The battery cell according to any one of claims 1 to 4, wherein the connection portion is a welding portion, and a penetration depth of the second region is smaller than a penetration depth of the first region.

6. The battery cell according to claim 5, wherein the penetration depth of the second region is not greater than two thirds of the penetration depth of the first region.

7. The battery cell according to any one of claims 1 to 6, wherein the second region is located at a long side of a connection region of the cover body and the casing.

8. The battery cell according to any one of claims 1 to 7, wherein the casing has the first flange portion at one end thereof where the opening is, the cover body has a second flange portion, the first flange portion and the second flange portion are seamed and connected to form a seaming part, the seaming part is the sealing structure, and the seaming part is connected to the cover body through the connection portion.

9. The battery cell according to any one of claims 1 to 7, wherein the cover body has the first flange portion, the casing has a second flange portion at one end thereof where the opening is, the first flange portion and the second flange portion are seamed and connected to form a seaming part, the seaming part is the sealing structure, and the seaming part is connected to the casing through the connection portion.

10. The battery cell according to claim 8 or 9, wherein the seaming part is coiled at least one turn.

11. The battery cell according to any one of claims 1 to 7, wherein the casing has a limiting portion and the first flange portion at one end thereof where the opening is, and an edge portion of the cover body is clamped between the limiting portion and the first flange portion.

12. The battery cell according to claim 11, wherein the limiting portion is an annular structure extending in a circumferential direction of the casing, and the limiting portion forms a protrusion at an inner peripheral surface of the casing, and forms a recess at an outer peripheral surface of the casing.

13. The battery cell according to claim 11 or 12, wherein the battery cell further comprises:
a sealing member, provided between the limiting portion and the first flange portion, wherein the cover body and the casing are sealingly connected by the sealing member to form the sealing structure.

14. The battery cell according to any one of claims 1 to 13, wherein cover body is a wall with a largest area among all walls of the battery cell.

15. The battery cell according to any one of claims 1 to 14, wherein the battery cell further comprises:
electrode terminals, provided on the cover body or on a surface of the casing adjacent to the cover body, wherein the electrode terminals are electrically connected to the electrode assembly.

16. The battery cell according to any one of claims 1 to 15, wherein a thickness of the casing is 0.2-1.8 mm, and/or a thickness of the cover body is 0.2-1.8 mm.

17. A battery, comprising a plurality of battery cells each of which is according to any one of claims 1 to 16, wherein the plurality of battery cells are stacked in a first direction, a first wall of each of the battery cells is perpendicular to the first direction, the connection portion is disposed on the second wall, and the second wall intersects with the first wall.

18. An electric device, comprising at least one battery cell each according to any one of claims 1 to 16.
